# EUROPEAN PATENT APPLICATION

(11) **EP 4 825 455 A2**
(43) Date of publication of application: **21.10.2026**
(21) Application number: 26202537.2
(22) Date of filing: 21.02.2024
(51) Int. Cl.: A63B 21/00

(54) **OUTPUT DEVICE AND OUTPUT ASSEMBLY**

(30) Priority: 21.02.2023 CN 202310172558; 21.02.2023 CN 202310180437; 21.02.2023 CN 202310203074; 21.02.2023 CN 202310186423; 21.02.2023 CN 202320356894 U; 21.02.2023 CN 202320346128 U; 21.02.2023 CN 202320391256 U; 21.02.2023 CN 202320364243 U; 17.07.2023 CN 202321879489 U; 28.09.2023 CN 202322680388 U
(62) Document number(s) of the earlier application(s) in accordance with Art. 76 EPC: 24759711.5 / 4 672 567
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); YIN, Hang, Shenzhen, 518114 (CN); HE, Jiale, Shenzhen, 518114 (CN); YI, Jiahao, Shenzhen, 518114 (CN); MAI, Jiehong, Shenzhen, 518114 (CN); ZUO, Qianbin, Shenzhen, 518114 (CN)
(74) Representative: De Arpe Tejero, Manuel

(57) **Abstract**

An output device and an output assembly. The output device includes: a cable housing (100), where a rear side of the cable housing (100) is provided with a connecting structure (200) configured to be fixedly connected to a base (400), and a cable (900) in the cable housing (100) is configured to exit from a front side of the cable housing (100); a winding reel (130), disposed in the cable housing (100); a motor (500) and a power supply assembly (600), including a battery (610); and a PCB (740), disposed on the cable housing (100). The motor (500) and the battery (610) are detachably fixed to two other opposite sides of the cable housing (100), respectively, the motor (500) is configured to provide a traction force for the cable, and the power supply assembly (600) is configured to supply power to the motor (500).

## Description

### TECHNICAL FIELD

The present disclosure relates to the technical field of output devices, and in particular, to an output device and an output assembly.

### BACKGROUND

Cable-type output devices are a widely used category of output devices. This type of device usually applies resistance or power to a cable. During use, a user exercises by reciprocally pulling the cable or being driven by the cable. The cable-type output device uses a reel as a storage device for the cable. A cable head of the cable is generally fixed to an end portion of a side of the reel, and then the cable can be wound around an axial direction of the reel, which facilitates retraction and release of the cable.

The output device needs to bear a large load during use and may be subjected to a large torque, demanding high structural reliability of the output device.

### SUMMARY OF THE INVENTION

The present disclosure provides an output device and an output assembly.

According to a first aspect of the present disclosure, the output device according to an embodiment of the present disclosure includes: a cable housing, where a rear side of the cable housing may be provided with a connecting structure configured to be fixedly connected to a base, and a cable in the cable housing may be configured to exit from a front side of the cable housing; a winding reel, disposed in the cable housing, where the cable may be wound on the winding reel; a motor and a power supply assembly, where the power supply assembly may include a battery, the motor and the battery may be detachably fixed to two other opposite sides of the cable housing, respectively, the motor may be configured to provide a traction force for the cable, and the power supply assembly may be configured to supply power to the motor; and a PCB, disposed on the cable housing, where the battery may be electrically connected to the PCB via a first quick-connect connector.

In some embodiments, the power supply assembly further may include: a battery holder, fixedly connected to the cable housing; and a display screen, disposed at a front side of the battery, where both the battery and the display screen may be fixedly connected to the battery holder.

In some embodiments, the output device further may include a cable outlet wheel disposed on the front side of the cable housing, and the cable may be configured to exit from the cable housing via the cable outlet wheel.

In some embodiments, at least one of the following may be satisfied: the battery holder may be fixedly connected to the cable housing via a screw, and the display screen may be electrically connected to the PCB via a second quick-connect connector; or the motor may be electrically connected to the PCB via a third quick-connect connector.

In some embodiments, the first quick-connect connector may include: a first quick-connect sub-connector, disposed on the battery; and a second quick-connect sub-connector, disposed on the PCB.

In some embodiments, the motor may include a series motor set, and the series motor set may include a plurality of sub-motors whose power shafts may be connected in series end to end.

In some embodiments, the power supply assembly may include one or more of a battery, a power adapter, a connector, and a wiring rack.

In some embodiments, at least one of the following may be satisfied: the motor and the cable housing may be in communication with each other and define a heat dissipation channel; the cable housing and the power supply assembly may be in communication with each other and define a heat dissipation channel; or the motor and the power supply assembly may be in communication with each other and define a heat dissipation channel.

In some embodiments, at least one of the following may be satisfied: the heat dissipation channel actively dissipates heat through a heat dissipation fan, and the heat dissipation fan may be located in the heat dissipation channel. At least one of the cable housing, the motor, or the power supply assembly may be provided with a heat dissipation cover, and the heat dissipation cover may include a structural plate and a heat dissipation plate stacked on each other.

In some embodiments, the output device may further include: a locking apparatus, where the locking apparatus may include a movable locking arm, and the locking arm may include a first state in which the locking arm contacts and presses against a locked shaft when power may be off and a second state in which the locking arm may be away from the locked shaft when power may be on. The locked shaft may be any winding reel or cable-guiding wheel through which the cable passes, or a drive shaft or a motor shaft where the winding reel may be located, or any transmission shaft of a transmission assembly between the winding reel and the motor.

In some embodiments, at least one of the following may be satisfied: when power may be off, the locking arm locks the locked shaft via an elastic member, a magnetic member, or a mechanical self-locking transmission assembly, or contacts and presses against the locked shaft through friction self-locking; or when power may be on, the locking arm may be away from the locked shaft through a magnetic force of a locking electromagnet or a driving force of a locking motor.

In some embodiments, the output device may further include: a locking assembly, configured to lock the connecting structure; a first unlocking trigger apparatus, disposed on the motor and communicatively connected to the locking assembly; and a second unlocking trigger apparatus, disposed on the power supply assembly and communicatively connected to the locking assembly. The locking assembly may be configured to unlock the connecting structure when both the first unlocking trigger apparatus and the second unlocking trigger apparatus may be triggered.

In some embodiments the locking assembly may include: a locking member, movably disposed on the cable housing, and configured to abut against the connecting structure to lock the connecting structure; and a driving apparatus, in transmission connection with the locking member and connected to the first unlocking trigger apparatus and the second unlocking trigger apparatus. The driving apparatus may be configured to drive the locking member to move to unlock the connecting structure when both the first unlocking trigger apparatus and the second unlocking trigger apparatus may be triggered.

In some embodiments, the connecting structure may include: an engaging member movably disposed on the cable housing, and the engaging member may be engaged with the base to fix the cable housing to the base. When the engaging member may be engaged with the base, the locking member may be configured to abut against the engaging member to limit the movement of the engaging member. The driving apparatus may be configured to drive the locking member to move to release the abutment between the locking member and the engaging member when both the first unlocking trigger apparatus and the second unlocking trigger apparatus may be triggered.

According to a second aspect of the present disclosure, the output assembly according to some embodiments of the present disclosure may include: the output device according to any one of the foregoing embodiments; and a base, detachably connected to the connecting structure of the output device.

Additional aspects and advantages of the present disclosure will be partly given in the following description, and partly will become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the accompanying drawings.
FIG. 1 is a perspective structural view of an output device according to some embodiments of the present disclosure.
FIG. 2 is a perspective structural view of a cable housing according to some embodiments of the present disclosure.
FIG. 3 is a perspective structural view of a power supply assembly according to some embodiments of the present disclosure.
FIG. 4 is an exploded view of a partial structure of an output device according to some embodiments of the present disclosure.
FIG. 5 is a perspective structural view of an output device according to some embodiments of the present disclosure.
FIG. 6 is a partial enlarged view of portion A in FIG. 5.
FIG. 7 is a perspective structural view of an output device according to some embodiments of the present disclosure.
FIG. 8 is a partial enlarged view of portion B in FIG. 7.
FIG. 9 is a system block diagram of an output device according to some embodiments of the present disclosure.
FIG. 10 is a schematic diagram of a connection between a connecting structure and a base according to some embodiments of the present disclosure.
FIG. 11 is a schematic diagram of a connection between a connecting structure and a base according to some embodiments of the present disclosure.
FIG. 12 is a system block diagram of an output device according to some embodiments of the present disclosure.
FIG. 13 is a system block diagram of an output device according to some embodiments of the present disclosure.
FIG. 14 is a system block diagram of an output device according to some embodiments of the present disclosure.
FIG. 15 is a system block diagram of an output device according to some embodiments of the present disclosure.
FIG. 16 is a schematic diagram of combination scenarios of an output device in an embodiment.
FIG. 17 is a structural view of a heat dissipation cover according to an embodiment of the present disclosure.
FIG. 18 is a structural view of a locking apparatus according to an embodiment of the present disclosure.
FIG. 19 is a structural view of a pivoting cable arranging scheme according to some embodiments of the present disclosure.
FIG. 20 is a schematic diagram of a linkage mechanism of a pivoting cable arranging scheme according to some embodiments of the present disclosure.
FIG. 21 is a schematic diagram of a pivoting cable arranging scheme and a guiding mechanism according to some embodiments of the present disclosure.
FIG. 22 is a schematic diagram of a guiding mechanism and a pivot angle detection apparatus in one embodiment of the present disclosure.
FIG. 23 is a schematic diagram of a guiding mechanism and a pivot angle detection apparatus in another embodiment of the present disclosure.
FIG. 24 is a structural view of a sliding cable arranging scheme according to some embodiments of the present disclosure.
FIG. 25 is an internal structural view of a sliding cable arranging scheme according to some embodiments of the present disclosure.
FIG. 26 is a schematic diagram of a cable guiding mechanism of the sliding cable arranging scheme according to some embodiments of the present disclosure.
FIG. 27 is a schematic diagram of a cable arranging mechanism driven by a power mechanism according to some embodiments of the present disclosure.
FIG. 28 is a schematic diagram of a cable arranging mechanism driven by a linkage mechanism according to some embodiments of the present disclosure.
FIG. 29 is a structural view of a motor according to some embodiments of the present disclosure.

### DETAILED DESCRIPTION

Embodiments of the present disclosure are described in detail below, and examples of the embodiments are shown in accompanying drawings, and the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "connect", "connection" should be understood broadly. For example, "connection" may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact by using an additional feature between them. Moreover, a first feature being "above", "upward", and "on" a second feature may include the first feature being directly above and obliquely above the second feature, or only indicate that the first feature has a higher horizontal height than the second feature. A first feature being "below", "beneath" and "underneath" the second feature includes the first feature being directly below and obliquely below the second feature, or only indicate that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and material, but those having ordinary skill in the art may be aware of the application of other processes and/or the use of other materials.

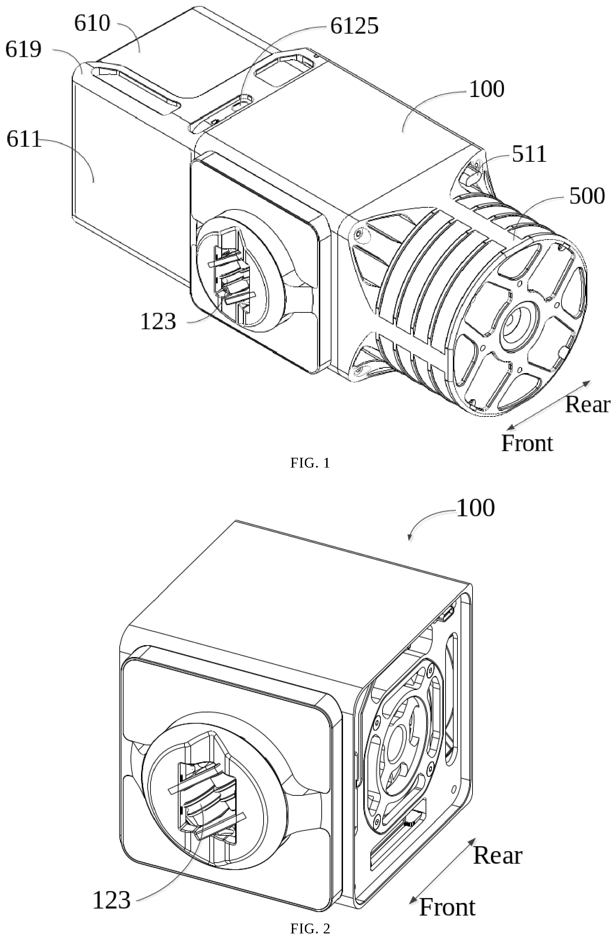

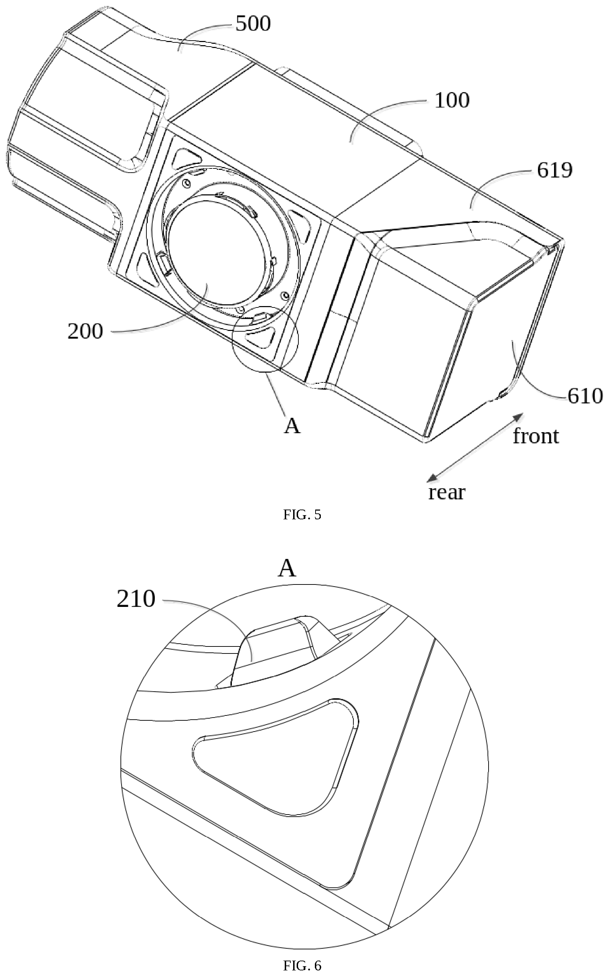

Referring to FIGS. 1-7, the output device in an embodiment of the present disclosure includes: a cable housing 100; a connecting structure 200, arranged at a rear side of the cable housing 100, and configured to be fixedly connected to a base 400, where a cable 900 in the cable housing 100 is configured to exit from a front side of the cable housing 100; a motor 500, fixedly connected to the cable housing 100 and configured to provide a traction force for the cable 900; and a power supply assembly 600, fixedly connected to the cable housing 100 and configured to supply power to the motor 500.

In an embodiment of the present disclosure, the rear side of the cable housing 100 is fixedly connected to the base 400 via the connecting structure 200, and the cable 900 is configured to exit from the front side of the cable housing 100. Thus, a lever arm may be shortened when the cable 900 is subjected to a force, so as to reduce a torque borne by the cable housing 100, which not only reduces the requirement of the strength of the cable housing 100, but also facilitates more stable fixation of the cable housing 100 on the base 400.

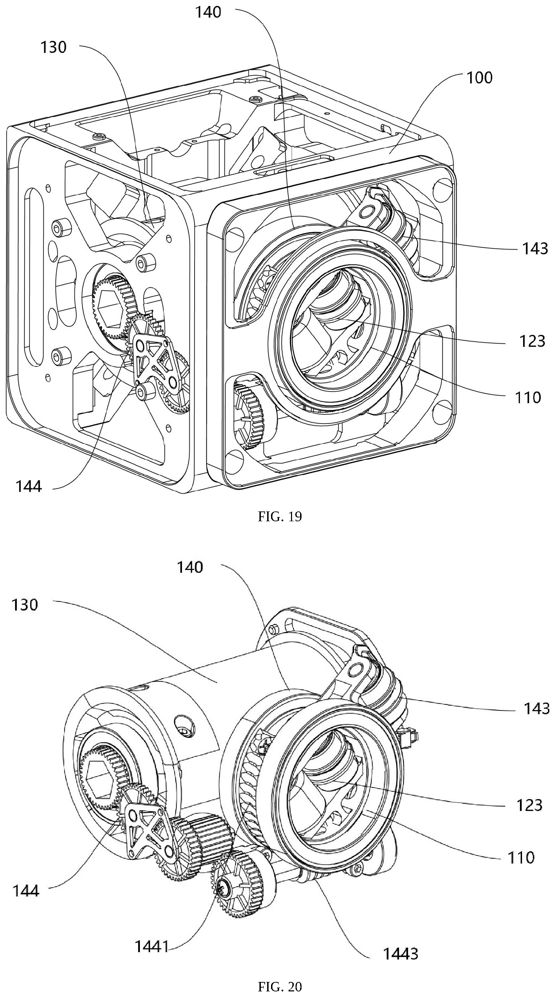

In some embodiments, the motor 500 may be fixed to the cable housing 100 by a bolt. For example, a reel, i.e., a winding reel 130 as shown in FIGS. 19-20 and 24-28, connected to an output shaft of the motor 500 may be arranged in the cable housing 100. The cable 900 is wound around the reel and may exit from the cable housing 100 via a cable outlet wheel 123, such as a cable outlet pulley, on the front side of the cable housing 100. A torque of the motor 500 may be transmitted to the reel to achieve a traction function.

In some embodiments, the motor 500 is connected to the cable housing 100 via a detachable connection or a quick-release connection. The power supply assembly 600 is connected to the cable housing 100 via a detachable connection or a quick-release connection. In some embodiments, the motor 500 includes a series motor set 580, and the series motor set 580 includes a plurality of sub-motors 581 with power shafts connected end to end. With a detachable connection between the motor 500 and the series motor set 580, a user may reasonably series-connect a suitable number of sub-motors 581 according to the user's needs. Power shafts of adjacent sub-motors 581 may be connected end-to-end, and both ends of the power shaft penetrate through the sub-motor 581 and are connected to adjacent motors 500, which may be connected via a coupling or via a spline 573. For example, both ends of the power shaft may be connected via a spline sleeve. Alternatively, one end of the power shaft may be configured with a spline hole while an opposite end of the power shaft is configured with the spline 573. At the same time, power supplies of the sub-motors 581 in the series motor set 580 will be connected in parallel.

In some embodiments, the power supply assembly 600 is fixedly connected to the cable housing 100 via the motor 500, and the motor 500 is located between the cable housing 100 and the power supply assembly 600. In some embodiments, the motor 500 may also be located between the cable housing 100 and the power supply assembly 600, the motor 500 provides a driving force for the cable housing 100, and the power supply assembly 600 supplies power to both the motor 500 and the cable housing 100. This layout allows a product to achieve more diverse configurations, meeting user needs. In some embodiments, the power supply assembly 600 includes one or more of a battery 610, a power adapter, a connector, and a wiring rack.

When the power supply assembly 600 is the power adapter or the connector, the user may directly connect the output device to power for use, which is suitable for more application scenarios. In some embodiments, the power supply assembly 600 may also be used in combination with the battery 610, that is, the user may connect the output device to power for use, and retain the battery 610, which can meet power supply needs when power is off or when the output device is carried out, or in other situations where electricity connection is unavailable. In some embodiments, the power supply assembly 600 may also be a power-connectable rack, such as a power-connectable gantry. At this time, the cable housing 100 and the motor 500 may be directly assembled on the gantry and connected to power, which is suitable for more application scenarios.

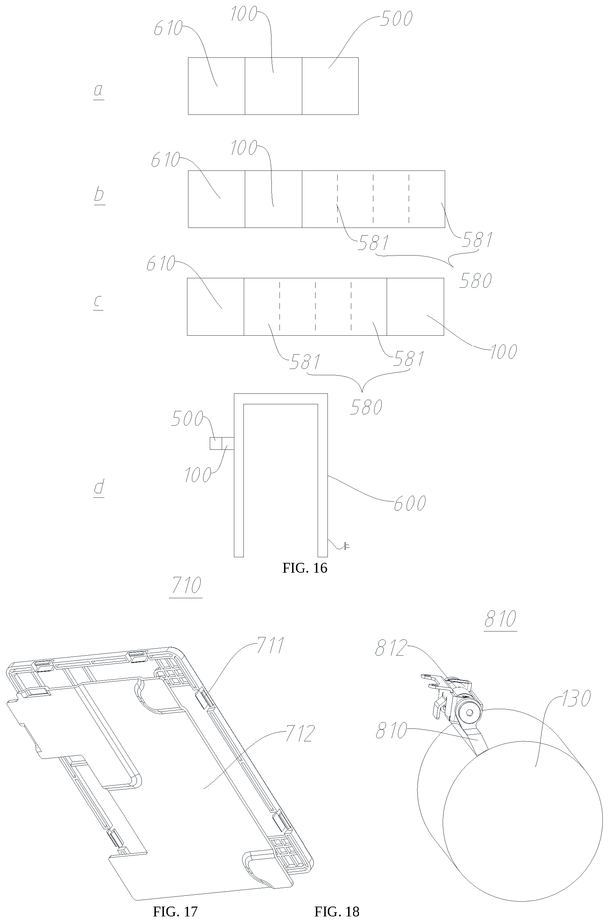

In some embodiments, as shown in FIG. 16, several possible combination scenarios are shown. FIG. 16a shows that the battery 610 and the motor 500 are located on both sides of the cable housing 100. FIG. 16b shows that the motor 500 is configured as a series motor set 580 with four sub-motors 581 connected in series. FIG. 16c shows that the series motor set 580 is located in the middle, with the battery 610 and the cable housing 100 on both sides of the series motor set 580 respectively. FIG. 16d shows that the power supply assembly 600 uses the power-connectable gantry, and the cable housing 100 and the motor 500 are connected sequentially to the power supply assembly 600. At this time, the connecting structure 200 of the cable housing 100 does not need to be fixed separately, and the gantry of the power supply assembly 600 may be configured to fix the output device.

In some embodiments, the motor 500 and the cable housing 100 are in communication with each other and define a heat dissipation channel; and/or, the cable housing 100 and the power supply assembly 600 are in communication with each other and define a heat dissipation channel; and/or, the motor 500 and the power supply assembly 600 are in communication with each other and define a heat dissipation channel.

In some embodiments, the heat dissipation channel actively dissipates heat through a heat dissipation fan 730, and the heat dissipation fan 730 is located in the heat dissipation channel.

After the motor 500, the cable housing 100, and the power supply assembly 600 are assembled, there are the heat dissipation channels in communication with each other, which may allow for ventilation and heat dissipation to help support continuous operation of the output device. For example, a channel in communication with the interior of a housing of the motor 500 may be left at a contact surface between the motor 500 and the cable housing 100, and a channel in communication with the interior of the cable housing 100 may be left at the contact surface between the cable housing 100 and the motor 500. When the motor 500 is connected to the cable housing 100, these two channels will also be in communication with each other to define the heat dissipation channel, and ventilation and heat dissipation will be performed simultaneously. In some embodiments, the heat dissipation fan 730 may also be provided to actively dissipate heat in the heat dissipation channel. The heat dissipation fan 730 may be specifically located on the cable housing 100, the motor 500, or the power supply assembly 600 and located in the heat dissipation channel.

In some embodiments, a heat dissipation cover 710 is provided on a shell 571 of the output device. A structural plate 711 can provide structural support for the heat dissipation cover 710, and the structural plate 711 has higher strength than the heat dissipation plate 712. The structural plate 711 has good thermal conductivity, and can absorb heat inside the shell 571 and transfer the heat outside the shell 571. In some embodiments, at least one heat dissipation hole 1331 is further defined on the structural plate 711 to conduct heat from the heat dissipation plate 712 to the outside. The heat dissipation plate 712 is located inside the structural plate 711. The heat dissipation plate 712 is detachably connected to the structural plate 711, to facilitate assembly and replacement. In some embodiments, the heat dissipation plate 712 is partially recessed inwardly to contact a heat-generating element in the shell 571, so as to better transfer heat to the outside. In some embodiments, the structural plate 711 includes a support portion inwardly at a position corresponding to an inward recess of the heat dissipation plate 712 to provide support, which may ensure close contact between the heat dissipation plate 712 and the heat-generating element while also transferring heat to the structural plate 711. For example, as shown in FIG. 17, the heat dissipation plate 712 and the structural plate 711 are connected by a snap-fit, and the heat dissipation plate 712 defines at least one inward recess according to a position of the heat-generating element in the shell 571, and the structural plate 711 includes the support portion at the corresponding position.

In some embodiments, a locking apparatus 810 is also provided. The locking apparatus 810 includes a movable locking arm 811. The locking arm 811 includes a first state in which the locking arm 811 contacts and presses against a locked shaft 813 when power is off and a second state in which the locking arm 811 is away/distal from the locked shaft 813 when power is on. The locked shaft 813 may be any winding reel 130 or any cable-guiding wheel (such as a cable-guiding pulley) through which the cable 900 passes, or a drive shaft or a motor shaft where the winding reel 130 is located, or any transmission shaft of a transmission assembly between the winding reel 130 and the motor 500. In some embodiments, when power is off, the locking arm 811 locks the locked shaft 813 via an elastic member 243, a magnetic member 1415, or a mechanical self-locking transmission assembly 814, or contacts and presses against the locked shaft 813 through friction self-locking; and/or, when power is on, the locking arm 811 may be away from the locked shaft 813 through a magnetic force of a locking electromagnet or a locking motor 812.

The output device also includes the locking apparatus 810, which is configured to lock any winding reel 130 or any cable-guiding wheel through which the cable 900 passes, or the drive shaft or the motor shaft where the winding reel 130 is located, or any transmission shaft of the transmission assembly between the winding reel 130 and the motor 500 when the device is de-energized, so as to help reduce the possibility of the winding reel 130 rotating and a load falling to ground when the load is suspended by the cable 900. At this time, the locking arm 811 is in the first state. The locking arm 811 of the locking apparatus 810 may be rotatably or slidably mounted. When the locking arm 811 is in the second state, the locking arm 811 rotates or slides away from the locked shaft 813 to stop locking, to allow the output device to operate normally. In some embodiments, the elastic member 243 or a groove configured to increase friction is provided on the contact surface between the locking arm 811 and the locked shaft 813.

In some embodiments, in the first state, a locking force exerted on the locking arm 811 is provided by an elastic force, or the magnetic force, or the mechanical self-locking transmission assembly 814. For example, the elastic force can be exerted by the elastic member 243, or the magnetic force can be exerted by the magnetic member 1415. The mechanical self-locking transmission assembly 814, such as a self-locking worm gear, can also be provided, so that the locking arm 811 can be driven by the transmission assembly to rotate and press against or leave the locked shaft 813, and cannot be driven by the locked shaft 813.

In some embodiments, in the first state, before power loss or prior to power-off, the locking motor 812 or the locking electromagnet drives the locking arm 811 to contact the locked shaft 813. At this time, a force exerted by the locking arm 811 on the transmission shaft is within a friction angle between the locking arm 811 and the transmission shaft or between the locking arm 811 and the winding reel 130, that is, the locking arm 811 can form a frictional self-locking with the transmission shaft or the winding reel 130. At this time, self-locking can be achieved without setting an additional external force, that is, after power loss or after power-off, the locking arm 811 may continue to lock the locked shaft 813 when the locking motor 812 or the electromagnet is de-energized.

In some embodiments, in the second state, the locking arm 811 is driven by the locking motor 812 or the electromagnet to rotate or slide away from the locked transmission shaft.

For example, as shown in FIG. 18, before power loss, the locking motor 812 drives the locking arm 811 to rotate into contact with the winding reel 130. After power loss, the locking motor 812 is de-energized, and the load drives the winding reel 130 via the cable 900. The rotation of the winding reel 130 further increases contact effect of the locking arm 811, thereby locking the winding reel 130. After the locking motor 812 is started, the locking motor 812 drives the locking arm 811 to rotate away from the winding reel 130, so as to release the lock.

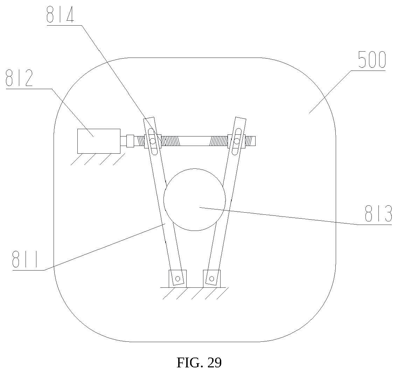

For example, as shown in FIG. 29, before power loss, the locking motor 812 drives the locking arm 811 to rotate and press against the motor shaft (the locked shaft 813) via the mechanical self-locking transmission assembly 814. After power loss, since the mechanical self-locking transmission assembly 814 is a self-locking nut-and-screw transmission, a nut connected to the locking arm 811 cannot drive a screw to rotate, thereby maintaining a locking state. When power is supplied or when power-on, the locking motor 812 drives the locking arm 811 away from the motor shaft (the locked shaft 813) via the mechanical self-locking transmission assembly 814. Two locking arms 811 are provided to lock the motor shaft (the locked shaft 813) from two directions respectively.

In some embodiments, referring to FIG. 1, FIG. 5, and FIG. 7, the motor 500 and the power supply assembly 600 are arranged on two opposite side surfaces of the cable housing 100.

In an embodiment, a weight of the motor 500 and a weight of the power supply assembly 600 (for example, the power supply assembly 600 may include the battery 610, etc.) are relatively large. By arranging the motor 500 and the power supply assembly 600 on the opposite sides of the cable housing 100, the weight thereof can be balanced, and a center of the output device is roughly located in the middle, which facilitates the user to hold the output device stably.

It should also be noted that when the user is accustomed to holding the output device with both hands, design of the embodiment can facilitate the user to hold the motor 500 and the power supply assembly 600 with both hands respectively, so that the user's hands bear weight evenly, which also improves the stability of holding the output device and reduces the possibility of the user accidentally dropping the output device when holding the output device.

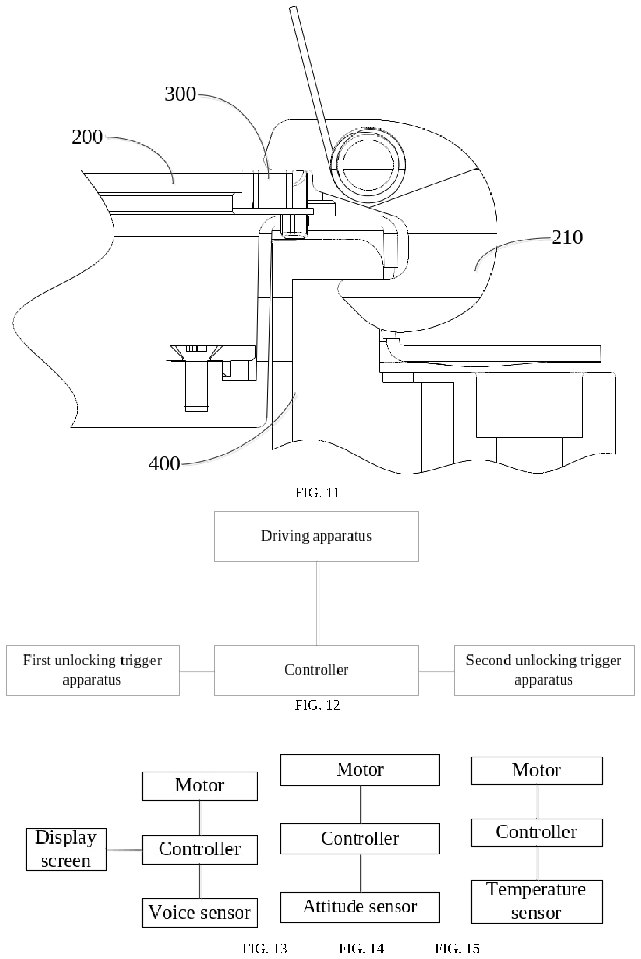

In some embodiments, referring to FIG. 1 and FIG. 12, the output device may further include: a locking assembly, configured to lock the connecting structure 200; a first unlocking trigger apparatus or a first unlocking switch 511 (for example, a push switch), disposed on the motor 500 and communicatively connected to the locking assembly; and a second unlocking trigger apparatus or a second unlocking switch 6125 (for example, a push switch), disposed on the power supply assembly 600 and communicatively connected to the locking assembly. The locking assembly is configured to unlock the connecting structure 200 when both the first unlocking trigger apparatus 511 and the second unlocking trigger apparatus 6125 are triggered/actuated.

In the embodiment, by arranging the first unlocking trigger apparatus 511 and the second unlocking trigger apparatus 6125 on the motor 500 and the power supply assembly 600 respectively, and when both the first unlocking trigger apparatus 511 and the second unlocking trigger apparatus 6125 are triggered, the connecting structure 200 can be unlocked. Thus, the user can be guided to hold the output device with both hands to detach the output device from the base 400, which may help reduce the possibility of accidental falling due to unstable holding when the output device is detached from the base 400, thereby improving user safety during use.

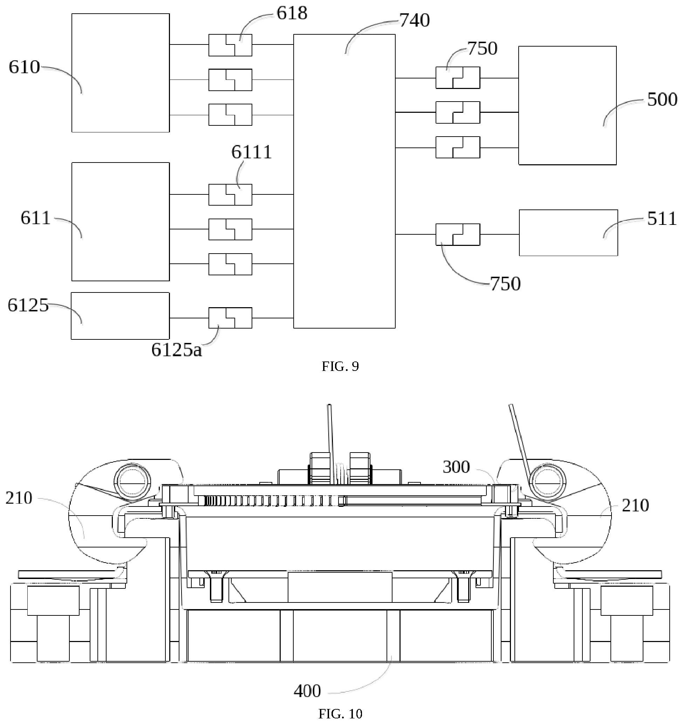

In some embodiments, referring to FIG. 10 to FIG. 12, the locking assembly may include: a locking member 300, movably disposed on the cable housing 100, and configured to abut against the connecting structure 200 to lock the connecting structure 200; and a driving apparatus, in transmission connection with the locking member 300, and connected to the first unlocking trigger apparatus 511 and the second unlocking trigger apparatus 6125. The driving apparatus is configured to drive the locking member 300 to move to unlock the connecting structure 200 when both the first unlocking trigger apparatus 511 and the second unlocking trigger apparatus 6125 are triggered.

In the embodiment, the locking member 300 is driven by the driving apparatus to be movable relative to the cable housing 100. For example, the locking member 300 may be slidably disposed on the cable housing 100, and an output shaft of the driving apparatus (for example, a motor) may be in driving connection with the locking member 300 via a gear-rack engagement. Thus, when the driving apparatus operates, the driving apparatus can drive the locking member 300 to slide relative to the cable housing 100.

In some embodiments, referring to FIG. 10 and FIG. 11, the connecting structure 200 may include an engaging member 210 (for example, a hook) movably disposed on the cable housing 100. The engaging member 210 is engaged with the base 400 to fix the cable housing 100 to the base 400. When the engaging member 210 is engaged with the base 400, the locking member 300 can abut against the engaging member 210 to limit the movement of the engaging member 210. The driving apparatus is configured to drive the locking member 300 to move to release the abutment between the locking member 300 and the engaging member 210 when both the first unlocking trigger apparatus 511 and the second unlocking trigger apparatus 6125 are triggered.

For example, referring to FIG. 10 and FIG. 11, the engaging member 210 may be rotatably disposed on the cable housing 100. After the engaging member 210 is engaged with the base 400, the output device can be fixed on the base 400. Then, the locking member 300 can abut against the engaging member 210 to limit the engaging member 210 from rotating outward of the base 400 to disengage from the base 400, thereby locking the engaging member 210. When both the first unlocking trigger apparatus 511 and the second unlocking trigger apparatus 6125 are triggered, the driving apparatus can drive the locking member 300 to move, so that the locking member 300 and the engaging member 210 are released from abutment. The engaging member 210 can be rotated outward of the base 400 and disengage from the base 400, thus releasing the output device from the base 400.

Referring to FIGS. 19-28, in an embodiment of the present disclosure, a cable arranging and winding mechanism is disclosed, which is arranged in the cable housing 100. The cable arranging and winding mechanism includes a winding reel 130, a cable-arranging assembly 140 and a linkage assembly or a drive assembly 144. The winding reel 130 is rotatably disposed on the cable housing 100, and the cable-arranging assembly 140 is movably disposed on the cable housing 100. The linkage assembly 144 is connected to the winding reel 130 and the cable-arranging assembly 140, and enables the winding reel 130 and the cable-arranging assembly 140 to be linked. When in use, the cable 900 is wound on the winding reel 130, an end of the cable 900 is fixed on the winding reel 130, and the other end of the cable 900 passes through the cable-arranging assembly 140 and exits from the cable housing 100 through a cable outlet 110.

During operation, taking releasing the cable 900 as an example, the cable 900 is pulled, and at the same time, the winding reel 130 rotates to release the cable. The winding reel 130 rotates to drive the cable-arranging assembly 140 to move via the linkage assembly 144, and the cable-arranging assembly 140 moves synchronously with a position where the cable 900 is released from the winding reel 130, i.e., with a position of releasing the cable 900 from the winding reel 130. For example, if the cable 900 on the winding reel 130 is wound from left to right, the position where the cable 900 is released from the winding reel 130 is from the right to the left (i.e., a direction of releasing the cable 900 from the winding reel 130 is from the right to the left), and the cable-arranging assembly 140 moves synchronously from the right to the left, that is, a movement direction of the cable-arranging assembly 140 is consistent with the direction of releasing the cable 900 from the winding reel 130, so that the cable 900 on the winding reel 130 can be guided by the cable-arranging assembly 140, thereby achieving orderly releasing the cable 900. The cable 900 after releasing exits from the cable housing 100 through the cable outlet 110, which may maintain stable releasing the cable 900 at a fixed position. Taking winding/retracting the cable 900 as an example, the winding reel 130 rotates to drive the cable 900 to wind/retract, and at the same time, the winding reel 130 drives the cable-arranging assembly 140 to move via the linkage assembly 144. At this time, the cable-arranging assembly 140 moves synchronously with a position where the cable 900 is wound/retracted on the winding reel 130, i.e., with a position of winding or arranging the cable 900 on the winding reel 130. For example, if the cable 900 on the winding reel 130 is wound from left to right, the position where the cable 900 is wound or arranged on the winding reel 130 is from the left to the right (i.e., a direction of winding or arranging the cable 900 on the winding reel 130 is from the left to the right), and the cable-arranging assembly 140 moves synchronously from the left to the right, that is, the movement direction of the cable-arranging assembly 140 is consistent with the cable-arranging direction of winding the cable 900 on the winding reel 130, so that the cable 900 retracted through the cable outlet 110 can be guided by the cable-arranging assembly 140, thereby achieving orderly cable winding. The cable 900 after cable winding is stably wound on the winding reel 130, and the cable 900 that has not been wound is retracted in sequence at a fixed position, i.e., at the cable outlet 110.

By configuring the linkage assembly 144 and the cable-arranging assembly 140, ordered winding and releasing of the cable 900 on the winding reel 130 can be automatically achieved by utilizing the rotation of the winding reel 130 when the winding reel 130 releases the cable 900. At the same time, the cable outlet 110 located at a fixed position of the cable housing 100, can prevent the cable 900 leaving the winding reel 130 from being affected by the cable-arranging assembly 140.

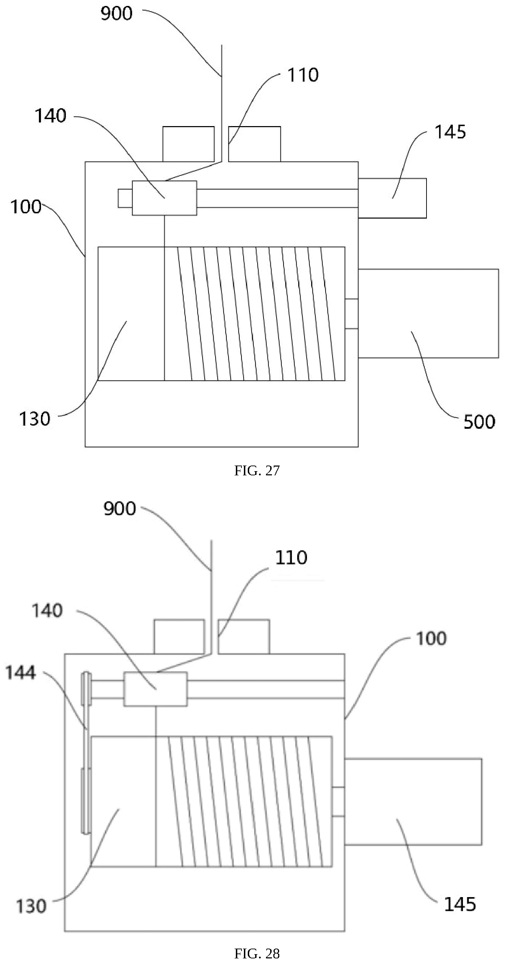

In some embodiments, as shown in FIG. 28, some embodiments of the present disclosure also disclose a cable arranging and winding mechanism, and the cable arranging and winding mechanism includes the cable housing 100, the winding reel 130, the cable-arranging assembly 140 and a power actuator 145. The winding reel 130 is rotatably arranged on the cable housing 100, the cable-arranging assembly 140 is movably arranged on the cable housing 100, and the power actuator 145 is configured to drive the cable-arranging assembly 140 to move. When in use, the cable 900 is wound on the winding reel 130, an end of the cable 900 is fixed on the winding reel 130, and the other end of the cable 900 passes through the cable-arranging assembly 140 and passes through the cable housing 100 via the cable outlet 110.

During operation, when the winding reel 130 releases or winds the cable 900, the power actuator 145 drives the cable-arranging assembly 140 to move in the same direction. For example, the cable 900 is wound from left to right. When the winding reel 130 releases the cable 900, the direction of releasing the cable 900 from the winding reel 130 is from right to left. At this time, the power actuator 145 drives the cable-arranging assembly 140 to move from right to left, so as to guide the cable 900 at the releasing position through the cable-arranging assembly 140, which may enable the cable 900 to smoothly pass through the cable outlet 110. For example, the cable 900 is wound from left to right of the winding reel 130. When the winding reel 130 winds the cable 900, the direction of winding the cable 900 on the winding reel 130 is from left to right. At this time, the power actuator 145 drives the cable-arranging assembly 140 to move from left to right, which may ensure that the cable 900 can not be repeatedly wound with each other, and reduce the possibility of the cable 900 being entangled and knotted on the winding reel 130.

By configuring the power actuator 145 and the cable-arranging assembly 140, the power actuator 145 can be configured to drive the cable-arranging assembly 140 to move when the winding reel 130 releases and winds the cable 900, so as to achieve ordered winding and releasing of the cable 900 on the winding reel 130. At the same time, the cable outlet 110 located at the fixed position of the cable housing 100 can prevent the cable leaving the winding reel 130 from being affected by the cable-arranging assembly 140, or enable the irregular cable 900 to be released/unwound orderly at the fixed position and then arranged neatly on the winding reel 130.

The concept of the cable housing 100 only refers to providing installation and positioning for the winding reel 130, the cable-arranging assembly 140, the linkage assembly 144, the power actuator 145 and the cable outlet 110. The cable housing 100 can be a single component or a combination of a plurality of components fixed to each other. The movement of the cable-arranging assembly 140 in some embodiments of the present disclosure can be translation or pivoting, which is not limited in the present disclosure. The linkage assembly 144 can be a gear transmission via a gear set, or a belt transmission or a chain transmission, or a worm 1443/worm gear transmission, or a crank-slider assembly, or a crank rocker assembly or other contact transmission modes, or a non-contact force transmission (for example, through magnetic transmission, etc.); and any transmission mode in the related art is included therein. The power actuator 145 can be a motor 500, or an electric push shaft, or other mechanical motion power sources such as hydraulic or pneumatic power sources, which can also include a transmission assembly for transmitting power from the power source to the cable-arranging assembly 140, and any power source or any integrated assembly of a power source and a transmission assembly in the related art that can transmit power to the cable-arranging assembly 140 for movement is included.

In some embodiments, as shown in FIGS. 19-23, the cable-arranging assembly 140 is pivotably arranged on the cable housing 100, and a pivot point of the cable-arranging assembly 140 is the cable outlet 110. Since the cable-arranging assembly 140 pivots about the cable outlet 110, a distance between a position where the cable 900 passes through the cable-arranging assembly 140 and the cable outlet 110 is constant, that is, the cable-arranging assembly 140 pivots to any position without affecting movement of this section of the cable 900, which may improve the stability of the cable-arranging assembly 140.

In some embodiments, the cable-arranging assembly 140 includes a pivoting seat 1411 and a cable-guiding arm 1412 connected to each other. The pivoting seat 1411 is rotatably disposed on the cable housing 100 around the cable outlet 110, and the cable-guiding arm 1412 is configured for the cable 900 to pass through. An angle detection assembly configured to detect a pivot angle of the cable-arranging assembly 140 is also provided. The pivot angle of the cable-arranging assembly 140 can be calculated via an angle detection apparatus 1413. Since a transmission ratio of the linkage assembly 144 and a diameter of the winding reel 130 are both constants, the number of revolutions of the winding reel 130 can be obtained by calculating the pivot angle, and then working status of releasing and winding can be obtained, such as working progress of releasing or winding, or a length of the cable 900 that has been wound or unwound, etc.

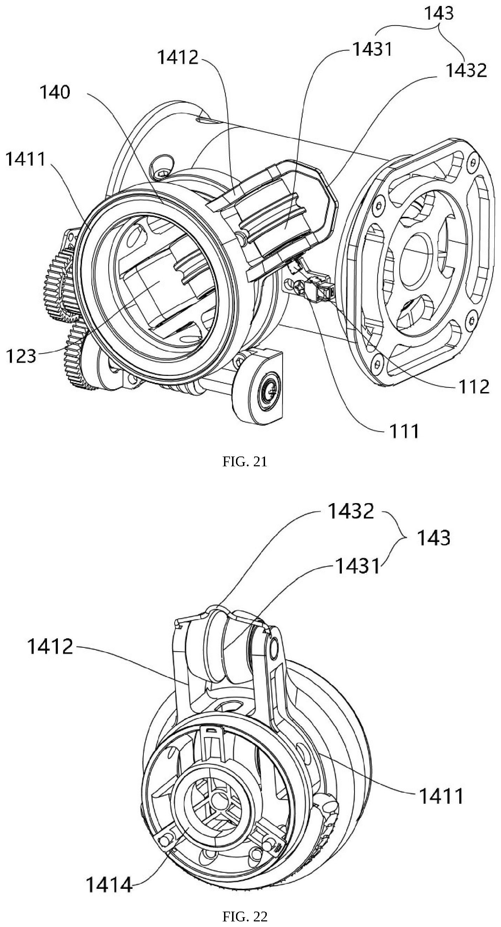

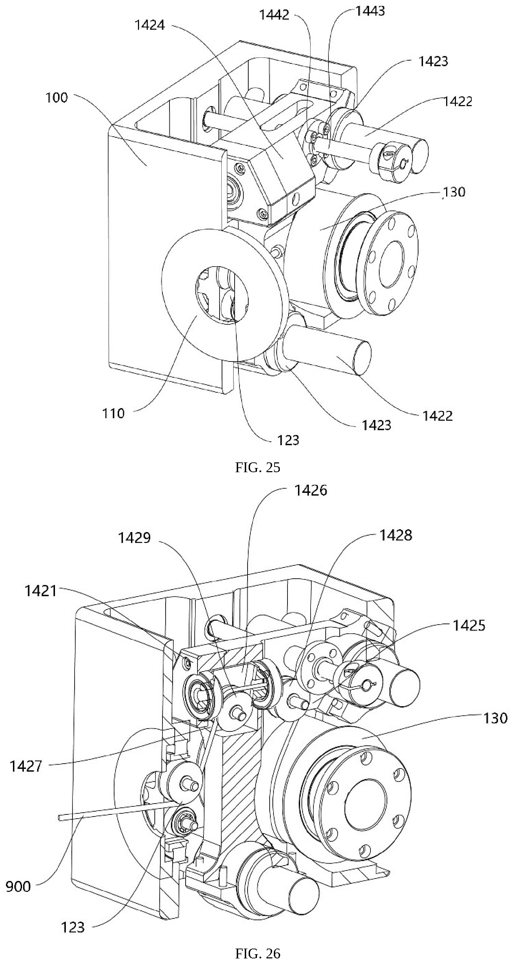

In some embodiments, as shown in FIG. 22, the angle detection apparatus 1413 may include a magnetic ring 1414 provided on the pivoting seat 1411, that is, when the pivoting seat 1411 rotates, a pivoting Hall sensor 1416 fixed on the cable housing 100 can detect change of magnetic field strength, and a pivot angle of the pivoting seat 1411 can be obtained according to magnitude of the magnetic field strength. As shown in FIG. 25, the angle detection apparatus 1413 can also include a magnetic member 1415 provided on the cable-guiding arm 1412 and a pivoting Hall sensor 1416 provided on the cable housing 100. When the cable-guiding arm 1412 rotates with the pivoting seat 1411, the pivoting Hall sensor 1416 fixed on the cable housing 100 can also sense the change of magnetic field strength, and the pivot angle of the pivoting seat 1411 and the cable-guiding arm 1412 can be obtained according to magnitude of the magnetic field strength.

In some embodiments, as shown in FIGS. 20-21, the linkage assembly 144 includes a self-locking worm wheel 1441 and a worm 1443. The winding reel 130 drives the self-locking worm wheel 1441 on the pivoting seat 1411 to rotate through the worm 1443. By utilizing the self-locking effect of the self-locking worm wheel 1441 and the worm 1443, one-way transmission of the worm 1443 to the worm wheel can be achieved, and self-locking of the worm wheel to the worm 1443 can be achieved at the same time, which can prevent the pivoting seat 1411 from rotating incorrectly due to gravity, impact or other reasons and thus driving the winding reel 130 to rotate for unwinding/releasing.

The self-locking worm wheel 1441 includes a complete full-circle worm wheel, or may also be an incomplete partial worm wheel, as long as the arrangement of worm wheel teeth of the worm wheel satisfies the pivoting stroke.

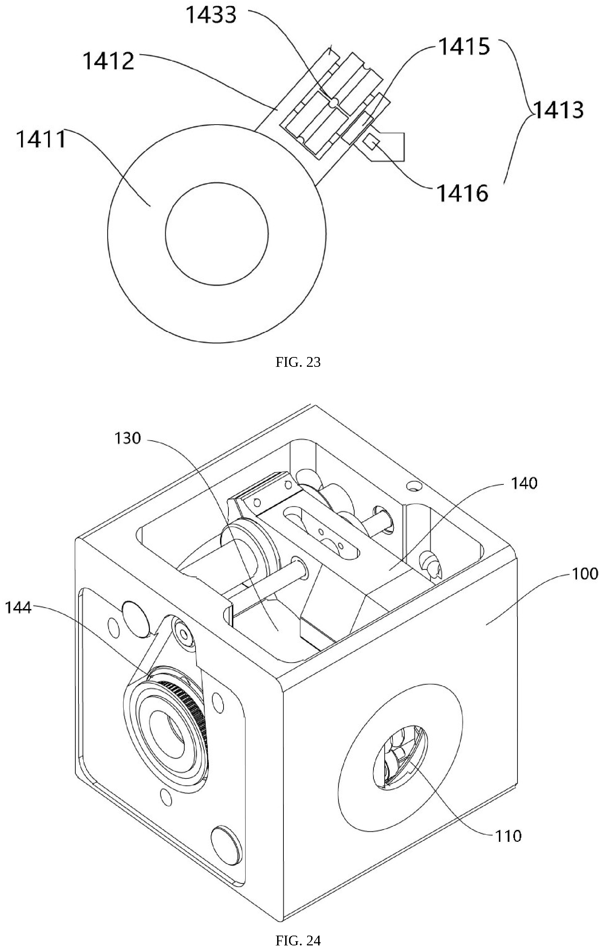

In some embodiments, as shown in FIGS. 24-26, the cable-arranging assembly 140 is slidably disposed on the cable housing 100, and a sliding direction is substantially parallel to an axial direction of the winding reel 130. When the winding reel 130 releases/unwinds or winds the cable 900, a movement of the position of releasing the cable 900 and a movement of the position of winding the cable 900 are substantially parallel to an axis of the winding reel 130. By configuring the cable-arranging assembly 140 in the same direction, the position of releasing the cable 900, the position of winding the cable 900, and the cable-arranging assembly 140 remain relatively stationary during releasing or winding, further improving stability.

In some embodiments, as shown in FIG. 25, the cable-arranging assembly 140 includes a sliding base 1421 slidably disposed on the cable housing 100, and a cable-guiding assembly 1424 disposed on the sliding base 1421 and configured for the cable 900 to pass through. A guide shaft 1422 is disposed on the cable housing 100 along a direction parallel to an axial direction of the winding reel 130, and the sliding base 1421 is configured to be slidable on the guide shaft 1422 through a linear bearing 1423. The arrangement of the guide shaft 1422 and the linear bearing 1423 can reduce a sliding resistance of the sliding base 1421, which may improve the sliding precision of the sliding base 1421. At the same time, the guide shaft 1422 and the linear bearing 1423 can provide stable support for the sliding base 1421. In some embodiments, there are at least two guide shafts 1422 and at least two sliding bases 1421, and two sets of guide shafts 1422 can provide more stable support for the cable housing 100.

In some embodiments, the linkage assembly 144 includes a worm 1443 and a self-locking worm gear nut 1442. The worm 1443 is in transmission connection with the winding reel 130, and the worm gear nut is disposed on the sliding base 1421. Rotation of the winding reel 130 drives the worm 1443 to rotate, thereby driving the self-locking worm gear nut 1442 and the sliding base 1421 to translate or move along the worm 1443. The self-locking worm gear nut 1442 can also achieve one-way transmission from the worm 1443 to the self-locking worm gear nut 1442, and achieve self-locking of the self-locking worm gear nut 1442 to the worm 1443 at the same time, thereby preventing the sliding base 1421 from rotating incorrectly due to gravity, impact or other reasons and thus driving the winding reel 130 to rotate for releasing.

In some embodiments, as shown in FIG. 26, the cable-guiding assembly 1424 includes a cable-arranging port or cable winding port 1425 disposed on the sliding base 1421, and a rotating base 1426 located at a rear side of the cable-arranging port 1425 and rotatably disposed on the sliding base 1421 around a cable outgoing/outlet direction of the cable-arranging port 1425. The rotating base 1426 includes a threading channel and a direction-changing port 1427. The threading channel is defined on the rotating base 1426 along a rotating axis direction. The direction-changing port 1427 is disposed on the rotating base 1426 and in communication with the threading channel. The direction-changing port 1427 is tangent to a rotating axis of the rotating base 1426, and the cable 900 sequentially passes through the cable-arranging port 1425, the threading channel and the direction-changing port 1427, and finally exits from the cable outlet 110.

The cable-arranging port 1425 is disposed on the sliding base 1421 opposite to the winding reel 130, and the cable-arranging port 1425 includes a cable incoming direction entering from the winding reel 130 and a cable outgoing/outlet direction leaving the cable-arranging port 1425 and entering the threading channel of the rotating base 1426.

During operation, as the sliding base 1421 slides along the guide shaft 1422, positions of the cable-guiding assembly 1424 and the cable outlet 110 will inevitably change, resulting in changes in a relative distance and a relative angle between the cable-guiding assembly 1424 and the cable outlet 110. In an embodiment, by providing the rotating base 1426 and utilizing the tension on the cable 900, the rotating base 1426 can adaptively adjust an angle of the rotating base 1426 with the change in a relative position between the cable-guiding assembly and the cable outlet 110, so that the direction-changing port 1427 of the rotating base 1426 is in some cases aligned with the cable outlet 110, thereby preventing cable jumping phenomenon caused by excessive change in the relative position between the cable-guiding assembly 1424 and the cable outlet 110.

In some embodiments, a first direction-changing wheel 1428, such as a first direction-changing pulley, may further be disposed at the cable-arranging port 1425 in the cable-guiding assembly 1424, and the first direction-changing wheel 1428 is tangent to a rotating axis direction of the rotating base 1426. In some embodiments, a second direction-changing wheel 1429, such as a second direction-changing pulley, may further be disposed at the direction-changing port 1427 in the cable-guiding assembly 1424, and the second direction-changing wheel 1429 is tangent to the rotating axis direction of the rotating base 1426. That is, by providing the first direction-changing wheel 1428 and the second direction-changing wheel 1429, sliding of the cable 900 relative to the cable-guiding assembly 1424 is converted into rolling, thereby reducing frictional resistance and wear.

In some embodiments, as shown in FIG. 26, a cable outlet wheel 123, such as a cable outlet pulley, is disposed at the cable outlet 110, which can reduce the wear of the cable 900 passing through the cable outlet 110. In some embodiments, the cable outlet wheel 123 is a pair of wheels, and at least one of the cable outlet wheels 123 is provided with rotational damping. By providing the rotational damping, the cable 900 can have a certain tension when releasing or winding the cable 900, so that the cable 900 is tightened. The rotational damping for the cable outlet wheel 123 can be directly provided for rotation of the cable outlet wheel 123.

In some embodiments, the transmission ratio of the linkage assembly 144 can be reasonably set, so that when the winding reel 130 rotates one revolution, the linkage assembly 144 is configured to drive the threading port of the cable-arranging assembly 140 to translate or pivot a distance corresponding to a diameter of the cable 900, further improving precision of winding and releasing the cable 900.

In some embodiments, when the winding reel 130 rotates in the same direction, the linkage assembly 144 drives the cable-arranging assembly 140 to pivot or slide from one end of the winding reel 130 to the other end of the winding reel 130, achieving orderly releasing or winding of the cable 900 from one end of the winding reel 130 to the other end of the winding reel 130. In some embodiments, as the length of the cable 900 increases, it may be useful to make full use of the winding reel 130 to perform multilayer cable arrangement on the winding reel 130. At this time, when the winding reel 130 rotates in the same direction, the linkage assembly 144 drives the cable-arranging assembly 140 to pivot or slide back and forth between the two ends of the winding reel 130, i.e., between one end of the winding reel 130 and the other end of the winding reel 130, so that when arranging each layer of cable 900, the cable-arranging assembly 140 can be configured for limited releasing or winding from one end of the winding reel 130 to the other end of the winding reel 130. The linkage assembly 144 can adopt any transmission assembly in the related art configured to achieve reciprocating motion (e.g., a cylindrical cam, an end cam, a crank-slider assembly).

In some embodiments, as shown in FIG. 23, the cable housing 100 is further provided with a third limiting structure 111, and the third limiting structure 111 is configured to limit a limit position of the cable-arranging assembly 140. The third limiting structure 111 limits the limit position of the movement of the cable-arranging assembly 140, preventing incorrect cable-arranging of the cable 900 caused by the cable-arranging assembly 140 exceeding the limit position. In some embodiments, the third limiting structure 111 is further provided with a micro switch 112. When the cable-arranging assembly 140 moves to the limit position, the micro switch 112 is triggered, and the micro switch 112 can send an electrical signal, which indicates that the cable-arranging assembly 140 has moved to the third limiting structure 111. The electrical signal can be configured to warn the limit position of the cable-arranging assembly 140 or make corresponding responses, such as stopping releasing and winding the cable 900.

In some embodiments, as shown in FIGS. 19-23, the cable-arranging assembly 140 includes a guiding assembly 143, and the guiding assembly 143 is configured for the cable 900 to pass through. The guiding assembly 143 can guide the cable 900, and a cable-guiding wheel 1431, such as a cable-guiding pulley, can be used in the guiding assembly 143 to reduce friction and wear when the cable 900 passes through the guiding assembly 143. In some embodiments, the guiding assembly 143 is further provided with a cable retention bracket 1432 in addition to the cable-guiding wheel 1431. The cable retention bracket 1432 can be a larger frame or a smaller frame that is shaped like the cable 900. The cable retention bracket 1432 is configured to limit the cable 900 on the cable-guiding wheel 1431, which may help reduce the possibility of the cable 900 contacting other structures except the cable-guiding wheel 1431. In some embodiments, as shown in FIG. 22, the guiding assembly 143 includes a pair of cable-guiding wheels 1433, and each of the pair of cable-guiding wheels 1433 defines a third cable groove. At this time, the cable 900 passes through the third cable grooves at a tangent position of the pair of cable-guiding wheels 1433. A space defined by two third cable grooves at the tangent position can limit a position of the cable 900, which may help reduce the friction between the cable 900 and other structures.

In some embodiments, a motion detection apparatus is further included, and the motion detection apparatus is configured to detect a current motion position of the cable-arranging assembly 140. By detecting the current motion position of the cable-arranging assembly 140 and combining with a pre-known parameter such as a transmission ratio of the linkage assembly 144, the diameter of the winding reel 130, or the diameter of the cable 900, it is possible to determine the number of revolutions of the winding reel 130 when releasing or winding the cable 900, a length of the cable 900 when releasing the cable 900, a length of the cable 900 when winding the cable 900, and an arrangement position of the cable 900 on the winding reel 130, etc., may be inferred.

In some embodiments, when the cable-arranging assembly 140 pivots, the motion detection apparatus may be the magnetic ring 1414 or the magnetic member 1415 in some of the foregoing embodiments. When the cable-arranging assembly 140 slides, the motion detection apparatus may include the magnetic member 1415 disposed on the sliding base 1421, and the pivoting Hall sensor 1416 disposed on the cable housing 100. By detecting magnetic field strength of the magnetic member 1415 via the pivoting Hall sensor 1416, a motion state of the sliding base 1421 and the cable-arranging assembly 140 can be known.

In some embodiments, the power supply assembly 600 may include: the battery 610, fixed on the cable housing 100 and electrically connected to a printed circuit board (PCB) 740 on the cable housing 100; and a display screen 611, fixed on the cable housing 100 and electrically connected to the PCB 740.

In this solution, the battery 610 can supply power to the motor 500 and related components on the PCB 740. The display screen 611 can display working status information of the output device, which may facilitate user operation and use of the output device.

In some embodiments, the display screen 611 may be a touch screen, for example. A user can issue/send a control command by touching the display screen 611, and the output device may operate in response to the control command, which may make it more convenient for the user to operate and use the output device.

In some embodiments, the display screen 611 is located at a side of the battery 610.

For example, the display screen 611 may be located at a front side of the battery 610, so that the user can easily view the information displayed on the display screen 611.

In some embodiments, the power supply assembly 600 may further include a battery holder 619 fixedly connected to the cable housing 100. Both the battery 610 and the display screen 611 are fixedly connected to the battery holder 619. For example, the battery holder 619 may be fixed to the cable housing 100 via a screw.

In some embodiments, the second unlocking trigger apparatus 6125 may be disposed on the battery holder 619.

In another possible implementation, the second unlocking trigger apparatus 6125 may be disposed on the battery 610. A relief hole corresponding to the second unlocking trigger apparatus 6125 may be defined on the battery holder 619, which may allow the user to directly press or touch the second unlocking trigger apparatus 6125 through the relief hole.

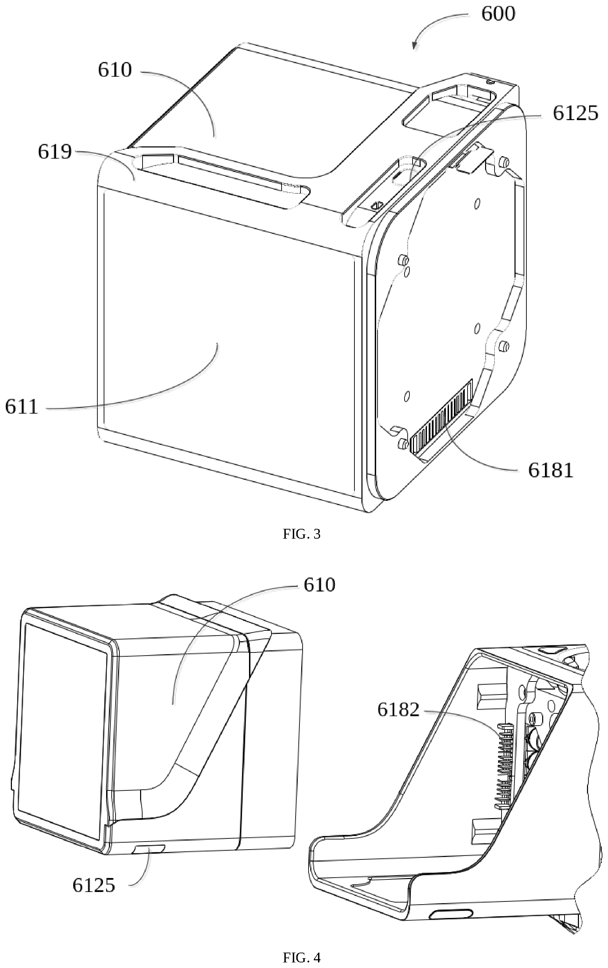

In some embodiments, referring to FIG. 3, FIG. 4, and FIG. 9, the battery 610 is electrically connected to the PCB 740 via a first quick-connect connector 618, thus facilitating quick disassembly of the battery 610.

Specifically, the first quick-connect connector 618 may include a first quick-connect sub-connector 6181 and a second quick-connect sub-connector 6182. The first quick-connect sub-connector 6181 is disposed on the battery 610, and the second quick-connect sub-connector 6182 is disposed on the PCB 740. When the battery 610 is mounted, the first quick-connect sub-connector 6181 is inserted into the second quick-connect sub-connector 6182, which may achieve electrical connection between the battery 610 and the PCB 740.

Referring to FIG. 9, the display screen 611 is electrically connected to the PCB 740 via a second quick-connect connector 6111. In this solution, by providing the second quick-connect connector 6111, the display screen 611 can be quickly disassembled.

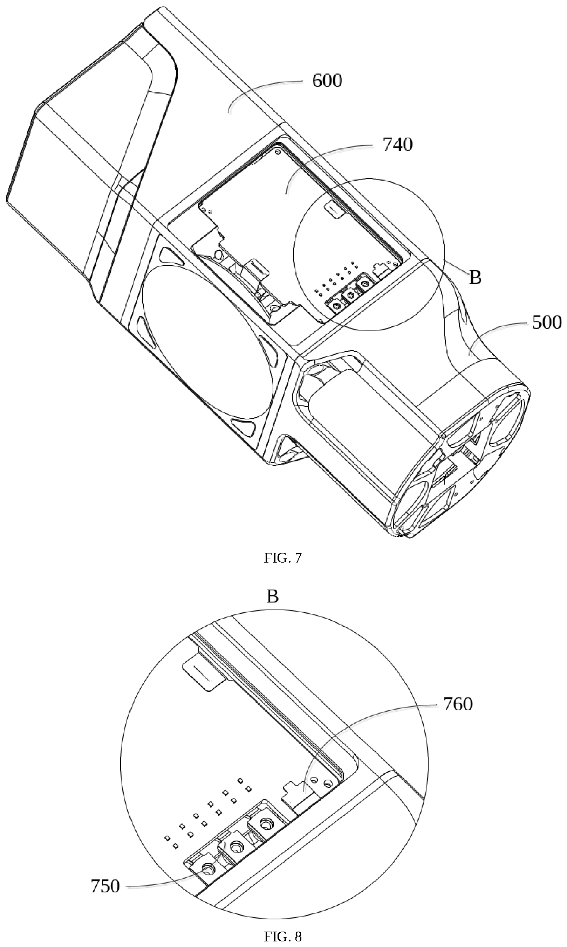

In some embodiments, referring to FIGS. 7 to 9, the motor 500 is electrically connected to the PCB 740 on the cable housing 100 via a third quick-connect connector 750. In this solution, the third quick-connect connector 750 facilitates quick disassembly of the motor 500, which may make maintenance and repair more convenient.

In some embodiments, referring to FIGS. 7 to 9, the first unlocking trigger apparatus 511 is connected to the PCB 740 on the cable housing 100 via a fourth quick-connect connector 760.

In some embodiments, referring to FIG. 9, the second unlocking trigger apparatus 6125 is connected to the PCB 740 on the cable housing 100 via a fifth quick-connect connector 6125a.

In some embodiments, referring to FIG. 11, the output device may further include a voice sensor communicatively connected to a controller of the output device. The controller is configured to control the motor 500 to operate according to a voice command received by the voice sensor. In this solution, voice control of the output device can be achieved by providing the voice sensor.

Further, referring to FIG. 13, the controller may also be communicatively connected to the display screen 611, and the working status information of the output device (e.g., a current traction force, etc.) may be displayed via the display screen 611, which may facilitate the user to accurately operate the output device as needed.

In some embodiments, the controller is further configured to control the motor 500 to stop operation when the voice command received by the voice sensor exceeds a preset loudness. In this solution, when the user encounters an emergency, the user can stop the motor 500 by transmitting a sound exceeding the preset loudness, thereby improving safety of use.

In some embodiments, referring to FIG. 14, the output device may further include an attitude sensor communicatively connected to the controller of the output device. The controller is configured to determine current motion state information of the output device according to the attitude sensor, and control the motor 500 to operate according to the motion state information. The motion state information includes at least one of a current acceleration of the output device and a current angle of the output device.

For example, the attitude sensor may be a gyroscope, and the gyroscope may be a mechanical gyroscope or a Micro Electro Mechanical Systems (MEMS). It can be understood that the current acceleration of the output device can be determined by the gyroscope. By continuously tracking the current acceleration of the output device, a current state of the output device, the current angle of the output device, and whether the output device is oscillating, etc., can be determined, so that abnormalities can be discovered in time during the use of the output device, and corresponding measures can be taken.

For example, if the current acceleration of the output device exceeds a preset acceleration threshold, the output device may accidentally fall off, and the motor 500 can be controlled to stop operation at this time.

In some embodiments, referring to FIG. 15, the output device may further include a first temperature sensor configured to detect the temperature of the motor 500 and communicatively connected to the controller of the output device. The controller is configured to reduce an output power of the motor 500 when it is determined that the temperature of the motor 500 exceeds a preset first temperature threshold.

In this solution, when the temperature of the motor 500 exceeds the preset first temperature threshold, it can reduce the overheating of the motor 500 by reducing the output power of the motor 500. For example, when the temperature of the motor 500 is very high, the motor 500 can be controlled to stop operation immediately. When the temperature of the motor 500 is relatively high, the operation of the motor 500 can be appropriately reduced to decrease the temperature rise of the motor 500.

In some embodiments, the controller is further configured to control a prompt apparatus to issue prompt information when the temperature of the motor 500 exceeds a preset second temperature threshold. The second temperature threshold is less than the first temperature threshold.

In this solution, when the temperature of the motor 500 exceeds the preset second temperature threshold, the prompt apparatus is controlled to issue/send prompt information. The prompt information can be in various forms. For example, voice prompt information can be issued via a loudspeaker or a buzzer to prompt the user that the temperature of the motor 500 is relatively high. Alternatively, the motor 500 can be controlled to generate vibration to prompt the user. Alternatively, display information corresponding to relatively high temperature of the motor 500 can be displayed via the display screen 611. Of course, when the output device is wirelessly connected to a user terminal via Bluetooth or the like, the prompt information can also be pushed to the user terminal.

The prompt information may remind the user to use the motor 500 gently to reduce the temperature rise of the motor 500, or remind the user not to touch the motor 500 to prevent burns, etc. The present disclosure does not limit this.

In some embodiments, an angle sensor and/or a revolution sensor can be disposed on a motor shaft, a reel shaft, or any transmission shaft, and configured to record a rotation angle and/or the number of revolutions of the corresponding transmission shaft, and further calculate how long the cable 900 of the current output device has been pulled out based on a transmission ratio between the transmission shaft and the reel shaft, and a periphery of the reel shaft.

In some embodiments, one or more of the technical solutions of the universal cable outlet assembly 120, the technical solution of the winding reel 130 to fix the cable 900, the solution of arranging the cable on the winding reel 130 via the cable-arranging assembly 140, the solution of coupling the connecting structure 200 with the base 400, the solution of the connecting busbar 520 in the motor 500, and the solution of the battery 610 can be applied not only to the output device but also to the corresponding structures of other fitness equipment.

The description with reference to terms such as "an embodiment", "some embodiments", "specifically", or "some examples" means that a specific feature, structure, material, or characteristic described in conjunction with the embodiment or example is included in at least one embodiment or example of the present disclosure. In this specification, the exemplary expressions of the above terms do not necessarily refer to the same embodiment or example. Moreover, the described specific features, structures, materials, or characteristics may be combined in any one or more embodiments or examples in a suitable manner.

Although the embodiments of the present disclosure have been shown and described, those having ordinary skill in the art can understand that various changes, modifications, substitutions, and variations may be made to the embodiments without departing from the principle and spirit of the present disclosure, and the scope of the present disclosure is defined by the claims and their equivalents.

## Claims

1. An output device, **characterized by** comprising:
a cable housing (100), wherein a rear side of the cable housing (100) is provided with a connecting structure (200) configured to be fixedly connected to a base (400), and a cable (900) in the cable housing (100) is configured to exit from a front side of the cable housing (100);
a winding reel (130), disposed in the cable housing (100), wherein the cable (900) is wound on the winding reel (130);
a motor (500) and a power supply assembly (600), wherein the power supply assembly (600) comprises a battery (610), the motor (500) and the battery (610) are detachably fixed to two other opposite sides of the cable housing (100), respectively, the motor (500) is configured to provide a traction force for the cable, and the power supply assembly (600) is configured to supply power to the motor (500); and
a PCB (740), disposed on the cable housing (100), wherein the battery (610) is electrically connected to the PCB (740) via a first quick-connect connector (618).

2. The output device according to claim 1, wherein the power supply assembly (600) further comprises:
a battery holder (619), fixedly connected to the cable housing (100); and
a display screen (611), disposed at a front side of the battery (610);
wherein both the battery (610) and the display screen (611) are fixedly connected to the battery holder (619).

3. The output device according to claim 2, wherein the output device further comprises a cable outlet wheel (123) disposed on the front side of the cable housing (100), and the cable is configured to exit from the cable housing (100) via the cable outlet wheel (123).

4. The output device according to claim 2, wherein at least one of the following is satisfied:
the battery holder (619) is fixedly connected to the cable housing (100) via a screw, and the display screen (611) is electrically connected to the PCB (740) via a second quick-connect connector (6111); or
the motor (500) is electrically connected to the PCB (740) via a third quick-connect connector (750).

5. The output device according to any one of claims 1 to 4, wherein the first quick-connect connector (618) comprises:
a first quick-connect sub-connector (6181), disposed on the battery (610); and
a second quick-connect sub-connector (6182), disposed on the PCB (740).

6. The output device according to claim 1, wherein the motor (500) comprises a series motor set (580), and the series motor set (580) comprises a plurality of sub-motors (581) whose power shafts are connected in series end to end.

7. The output device according to claim 1, wherein the power supply assembly (600) comprises one or more of a battery (610), a power adapter, a connector, and a wiring rack.

8. The output device according to claim 1, wherein at least one of the following is satisfied:
the motor (500) and the cable housing (100) are in communication with each other and define a heat dissipation channel;
the cable housing (100) and the power supply assembly (600) are in communication with each other and define a heat dissipation channel; or
the motor (500) and the power supply assembly (600) are in communication with each other and define a heat dissipation channel.

9. The output device according to claim 8, wherein at least one of the following is satisfied:
the heat dissipation channel actively dissipates heat through a heat dissipation fan (730), and the heat dissipation fan (730) is located in the heat dissipation channel; or
at least one of the cable housing (100), the motor (500), or the power supply assembly (600) is provided with a heat dissipation cover (710), and the heat dissipation cover (710) comprises a structural plate (711) and a heat dissipation plate (712) stacked on each other.

10. The output device according to claim 1, further comprising a locking apparatus (810), wherein the locking apparatus (810) comprises a movable locking arm (811), and the locking arm (811) includes a first state in which the locking arm (811) contacts and presses against a locked shaft (813) when power is off and a second state in which the locking arm (811) is away from the locked shaft (813) when power is on; and
the locked shaft (813) is any winding reel (130) or cable-guiding wheel (1431) through which the cable passes, or a drive shaft or a motor shaft where the winding reel (130) is located, or any transmission shaft of a transmission assembly between the winding reel (130) and the motor (500).

11. The output device according to claim 10, wherein at least one of the following is satisfied:
when power is off, the locking arm (811) locks the locked shaft (813) via an elastic member (243), a magnetic member (1415), or a mechanical self-locking transmission assembly (814), or contacts and presses against the locked shaft (813) through friction self-locking; or
when power is on, the locking arm (811) is away from the locked shaft (813) through a magnetic force of a locking electromagnet or a driving force of a locking motor (500).

12. The output device according to claim 1, further comprising:
a locking assembly, configured to lock the connecting structure (200);
a first unlocking trigger apparatus (511), disposed on the motor (500) and communicatively connected to the locking assembly; and
a second unlocking trigger apparatus (6125), disposed on the power supply assembly (600) and communicatively connected to the locking assembly;
wherein the locking assembly is configured to unlock the connecting structure (200) when both the first unlocking trigger apparatus (511) and the second unlocking trigger apparatus (6125) are triggered.

13. The output device according to claim 12, wherein the locking assembly comprises:
a locking member (300), movably disposed on the cable housing (100), and configured to abut against the connecting structure (200) to lock the connecting structure (200); and
a driving apparatus, in transmission connection with the locking member (300) and connected to the first unlocking trigger apparatus (511) and the second unlocking trigger apparatus (6125);
wherein the driving apparatus is configured to drive the locking member (300) to move to unlock the connecting structure (200) when both the first unlocking trigger apparatus (511) and the second unlocking trigger apparatus (6125) are triggered.

14. The output device according to claim 13, wherein the connecting structure (200) comprises: an engaging member (210) movably disposed on the cable housing (100), and the engaging member (210) is engaged with the base (400) to fix the cable housing (100) to the base (400);
when the engaging member (210) is engaged with the base (400), the locking member (300) is configured to abut against the engaging member (210) to limit the movement of the engaging member (210); and
wherein the driving apparatus is configured to drive the locking member (300) to move to release the abutment between the locking member (300) and the engaging member (210) when both the first unlocking trigger apparatus (511) and the second unlocking trigger apparatus (6125) are triggered.

15. An output assembly, **characterized by** comprising:
the output device according to any one of claims 1 to 14; and
a base (400), detachably connected to the connecting structure (200) of the output device.
